# EUROPÄISCHE PATENTSCHRIFT

(11) **EP 4 642 744 B1**
(45) Veröffentlichungstag und Bekanntmachung des Hinweises auf die Patenterteilung: **13.05.2026**
(21) Anmeldenummer: 24709451.9
(22) Anmeldetag: 11.03.2024
(51) Int. Cl.: C04B 20/02

(54) **MECHANO-CHEMISCHE AKTIVIERUNG VON TONEN**
MECHANOCHEMICAL ACTIVATION OF CLAYS
ACTIVATION MÉCANOCHIMIQUE D'ARGILES

(30) Priorität: 13.03.2023 DE 102023106210; 13.03.2023 LU 503619
(43) Veröffentlichungstag der Anmeldung: 05.11.2025
(73) Patentinhaber: thyssenkrupp Polysius GmbH, 59269 Beckum (DE); thyssenkrupp AG, 45143 Essen (DE); SCHWENK Zement GmbH & Co. KG, 89077 Ulm (DE); Celitement GmbH & Co. KG, 76344 Eggenstein-Leopoldshafen (DE)
(72) Erfinder: WILCZEK, Michael, 48231 Warendorf (DE); MAIER, Oliver, 48167 Münster (DE); LAMPE, Karl, 59320 Ennigerloh (DE); SACHSE, Carsten, 48147 Münster (DE); STROTMANN, Jan, 48653 Coesfeld (DE); WILLMS, Eike, 44309 Dortmund (DE); RUDOWSKI, Luc, 13100 Aix en Provence (FR); MÖLLER, Hendrik, 89604 Allmendingen (DE); HAMM, Andreas, 89275 Elchingen (DE); HINDER, Daniel, 76344 Eggenstein-Leopoldshafen (DE); FYLAK, Marc, 90530 Wendelstein (DE); NEUMANN, Thomas, 97753 Karlstadt (DE)
(74) Vertreter: Tetzner, Michael
(86) Internationale Anmeldenummer: PCT/EP2024/056405
(87) Internationale Veröffentlichungsnummer: WO 2024/188957

(56) Entgegenhaltungen:
- MARTIN REFORMAT: "Zementmahlung", 16 September 2020 (2020-09-16), XP93163189, Retrieved from the Internet <URL:https://e-pub.uni-weimar.de/opus4/files/4279/Dissertation_Reformat_Martin.pdf> [retrieved on 20240516]
- VIZCAYNO C ET AL: "Pozzolan obtained by mechanochemical and thermal treatments of kaolin", APPLIED CLAY SCIENCE, ELSEVIER, AMSTERDAM, NL, vol. 49, no. 4, 1 August 2010 (2010-08-01), pages 405 - 413, XP027198140, ISSN: 0169-1317, [retrieved on 20091003]

## Beschreibung

Die Erfindung betrifft ein Verfahren zur mechano-chemischen Aktivierung von Tonen.

Insbesondere im Bereich der Zementindustrie haben sich aktivierte Tone als Zusatzstoff etabliert. Der derzeit übliche Weg ist die Trocknung und Calcinierung der Tone, also eine thermische Aktivierung. Dies erfordert einen 2-stufigen Prozess:
1) Amorphisierung der Tonmineralen durch thermische Aktivierung (Kalzinierung) einschließlich Vortrocknung und
2) Oberflächenvergrösserung der amorphen Tonminerale durch Mahlung.

Ziel der thermischen Aktivierung ist es, die kristalline Struktur der Tonmineralen zu zerstören und in eine amorphe Struktur umzuwandeln, damit die einzelnen chemischen Komponenten wie Aluminiumoxid und Kieselsäure bei der Hydratation des Zements chemisch mit dem gemahlenen Klinker reagieren können. Ziel des zweiten Schritts ist die weitere mechanische Aktivierung durch Mahlen, um die Oberfläche der thermisch aktivierten Tone zu vergrößern und letztendlich die Kinetik der Zementhydratationsreaktion zu erhöhen.

Der neue Prozess der mechano-chemischen Aktivierung kombiniert die beiden Aktivierungsschritte - Amorphisierung und mechanische Aktivierung - in einem einstufigen Prozess mit einer Mühle mit hoher Energiedichte, bei der nur mechanische Energie verwendet wird.

Bei der thermischen Aktivierung wird zum einen Energie für die Erwärmung benötigt, zum anderen kann die hohe Temperatur auch weitere Stoffveränderungen bewirken, die gegebenenfalls unerwünscht sind. Ferner erfordert der thermische Prozess eine Rauchgasreinigung zur Abscheidung der entstehenden Stickoxid- und Schwefeloxid-Emissionen. Außerdem erfordert der thermische Prozess künftig den Einsatz von Verfahren zur Abscheidung und gegebenenfalls Reinigung des erzeugten beziehungsweise freigesetzten Kohlendioxids.

Aus der WO 2017 / 008 863 A1 ist ein Verfahren und eine Anlagenanordnung zum Aufbereiten und Aktivieren eines Rohstoffes bekannt.

Aus der EP 3 909 682 A1 ist ein Verfahren und eine Wälzmühle zum thermomechanischen Aktivieren eines Tongemisches bekannt.

Aus der DE 10 2015 106 109 A1 ist ein Verfahren zur tribochemischen Aktivierung von Bindemitteln und Zusatzstoffen bekannt.

Aus der US 8 783 589 B2 ist ein Mahlverfahren bekannt.

Aus der RU 2 209 824 C2 ist ein Verfahren zur Herstellung von Schlammpulvern bekannt.

Aus der CN 109 954 485 A ist ein Verfahren zur Herstellung von aktiviertem Ton bekannt.

Mit der Martin Reformat: "Zementmahlung", 16. September 2020 (2020-09-16), XP93163189, Gefunden im Internet: URL:https://e-pub.uni-weimar.de/opus4/files/4279/Dissertation_Reformat_Martin.pdf ist eine Dissertation zur Zementmahlung veröffentlicht.

Aus der VIZCAYNO C ET AL: "Pozzolan obtained by mechanochemical and thermal treatments of kaolin", APPLIED CLAY SCIENCE, ELSEVIER, AMSTERDAM, NL, Bd. 49, Nr. 4, 1. August 201 O (2010-08-01), • Seiten 405-413, XP027198140, ISSN: 0169-1317 [gefunden am 2009-10-03] ist die Herstellung eines Puzzolans durch mechano-chemische und thermische Behandlung von Kaolin bekannt.

Aus der TOLE ILDA ET AL: "Mechanochemical activation of natural clay minerals: an alternative to produce sustainable cementitious binders - review", MINERALOGY AND PETROLOGY, SPRINGER VIENNA, VIENNA, Bd. 113, Nr. 4, 8. Mai 2019 (2019-05-08), Seiten 449-462, XP036833323, ISSN: 0930-0708, DOI: 10.1007/S00710-019-00666-Y [gefunden am 2019-05-08] ist die mechano-chemische Aktivierung von Ton bekannt.

Da es sich bei Tonen um ein komplexes System handelt (insbesondere im Vergleich zum Brennen von Kalkstein), führen unterschiedliche Aktivierungsverfahren zu unterschiedlichen Produkten (aktivierten Tonen) mit unterschiedlichen Eigenschaften. Während insbesondere Kaolinit durch thermische Aktivierung leicht aktiviert werden kann, können andere Tonminerale wie Muskovit selbst bei hohen Temperaturen nicht oder nur unzureichend thermisch aktiviert werden. Ebenso führt die Unterschiedlichkeit der verwendbaren Tone dazu, dass nicht jedes Verfahren für jeden Ton verwendbar ist.

Aufgabe der Erfindung ist es, ein alternatives Aktivierungsverfahren bereitzustellen, um andere Tonqualitäten einsetzen zu können als sie derzeit als geeignet für eine Kalzinierung von Ton angesehen werden oder andere Produkteigenschaften erzielen zu können. Insbesondere soll eine Erweiterung der möglichen Rohmaterialbasis auf insbesondere muskovitische, illitische oder chloritische Tone möglich sein.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie der Zeichnung.

Das erfindungsgemäße Verfahren dient zur mechano-chemischen Aktivierung von mineralischem Material, insbesondere von Ton. Im Gegensatz zur konventionellen thermischen Aktivierung wird somit auf einen thermischen Behandlungsschritt nach dem Zerkleinern verzichtet. Das erfindungsgemäße Verfahren weist die folgenden Schritte auf:
a) Trocknen und Grobzerkleinern des mineralischen Materials,
b) Überführen des mineralischen Materials in eine erste Hochenergiemühle,
c) Trockenes Mahlen und mechano-chemisches Aktivieren des mineralischen Materials in der ersten Hochenergiemühle,
d) Entnehmen des aktivierten mineralischen Materials aus der ersten Hochenergiemühle.

In Schritt a) erfolgt zunächst ein erstes Trocknen und Grobzerkleinern. Hierbei kann die Reihenfolge von Trocknen und Grobzerkleinern beliebig sein, diese können auch (partiell) gleichzeitig erfolgen. Dieses ist dem Fachmann aus dem Stand der Technik gut bekannt. Feinstmühlen, also Mühlen, welche eine besonders geringe Partikelgröße erzeugen können, können meist mit zu grobem Material nicht betrieben werden. Zum anderen sind Feinstmühlen auf die Feinstvermahlung optimiert und daher für eine Grobzerkleinerung ungeeignet und unwirtschaftlich. Daher ist es üblich und sinnvoll, eine Grobzerkleinerung vor der Zuführung zu einer Feinstmühle durchzuführen. Des Weiteren ist eine Hauptanwendung die Aktivierung von Tonen, aber auch beispielsweise von auf Halden gelagerten Schlacken. Daher weisen die Edukte meistens eine zu hohe Ausgangsfeuchte auf, sodass eine Trocknung notwendig ist. Beides ist auch vor einer konventionellen thermischen Aktivierung üblich und kann in analoger Weise erfolgen.

Der erste wesentliche Punkt ist, dass das aktivierte mineralische Material eben direkt der ersten Hochenergiemühle entnommen wird und sich somit eben nicht erst ein thermischer Aktivierungsschritt anschließt. Die Aktivierung erfolgt also somit bereits vollständig in der ersten Hochenergiemühle. Die Amorphisierung und mechano-chemische Aktivierung erfolgt also in dem Schritt c) und somit während des Mahlvorgangs.

Der zweite wesentliche Punkt ist, dass erfindungsgemäß die Amorphisierung durch mechano-chemische Aktivierung mineralischer Materialien, insbesondere Tonmineralen, einen erhöhten Energieaufwand erfordert, der über die übliche Feinmahlung hinausgeht, was eine Mühle mit hoher Energiedichte erfordert, und in Schritt c) das Mahlen und mechano-chemische Aktivieren mit einem Energieeintrag pro Mahlraumvolumen von wenigstens 100 kW/m³ durchgeführt wird. Hierbei erfolgt das Mahlen ohne Wasserzugabe, also nicht nass beziehungsweise in einem Schlamm, sondern entsprechend der Trocknung in Schritt a) als trockenes Vermahlen ohne Feuchtigkeitszugabe, wodurch es sich von den klassischen Nassmahlverfahren unterscheidet. Ein üblicher Wert für eine Kugelmühle als Beispiel einer Feinstmühle liegt üblicherweise eher bei 20 kW/m³ und somit deutlich niedriger. Hierbei ist als das Mahlraumvolumen das im Inneren der ersten Hochenergiemühle zur Verfügung stehende Volumen zu verstehen, also das freie Volumen, wenn kein Material und beispielsweise auch keine Mahlkörper in der ersten Hochenergiemühle sind. Zur Mühle gehörende Bauteile, zum Beispiel eine Welle, die im Inneren beispielsweise beweglich angeordnet ist, zählt somit nicht zum Mahlraumvolumen, da dieses Volumen eben nicht durch Material einnehmbar ist.

Die mechano-chemische Aktivierung besteht aus drei Phasen bezirhungsweise Stadien: Im ersten Stadium sinkt die Partikelgröße (mehr oder weniger linear) zum Energieeintrag (Rittinger-Zone). Vereinfacht ausgedrückt, je mehr man mahlt, um so feiner wird das Produkt. Hierfür gibt es jedoch eine Grenze, eine Partikelgröße, die kaum mehr zu unterschreiten ist. Ab diesem Punkt kommt eine zweite Stufe, bei der sich die Partikelgröße mit weiterem Energieeintrag nicht weiter verändern lässt (Aktivierungs- und Aggregations-Zone). In diesem Stadium kommt es zur Zerstörung von kristallographischen Strukturen durch Lösen von Atombindungen, einzelne Atome oder ganze Gruppen von Atomen werden durch andere Atome oder Gruppen anderer Atome ersetzt. Insbesondere auf den Partikeloberflächen wird die anfängliche Kristallstruktur, sowie Bindungstyp und Oxidationsstufen von Atomen, aufgrund hoher Energieübertragung und nachfolgende chemische Reaktionen, verändert.. Aus wirtschaftlichen Gründen vermeidet man daher bei einer normalen Vermahlung, wo nur die Schaffung von Oberflächen erwartet wird, den Übergang von der ersten Stufe zur zweiten Stufe, die jedoch für die mechano-chemische Aktivierung notwendig ist.. Erhöht man die Energiezufuhr noch weiter, so kann eine dritte Stufe erreicht werden, bei der aufgrund der Agglomeration von Nanopartikeln wieder ein Ansteigen der Partikelgröße feststellbar ist (Agglomerations-Zone), was sich positiv auf die Verarbeitbarkeit von aktiviertem Tonzementbeton auswirkt. Dieser Bereich wird bei einer Vermahlung daher noch viel eher vermieden, da mit geringerem Aufwand ein besseres Ergebnis in Bezug auf die Partikelgrößenverteilung erzielt werden kann.

Es hat sich jedoch herausgestellt, dass es bei hohen Energieeinträgen, also in der zweiten Stufe, zu Veränderungen des Materials selbst kommt, die beispielsweise bei Tonen, ebenso wie eine thermische Aktivierung, zu einer Aktivierung führt, also zu einer Reaktivität, die die Verwendung als Bindemittel (und damit als Klinkerersatz) ermöglicht. Daher kann bei derart hohen Energieeinträgen auf eine anschließende thermische Behandlung verzichtet werden.

Hierbei hat sich jedoch herausgestellt, dass der Energiebedarf für eine reine mechano-chemische Aktivierung höher sein kann als für eine thermische Aktivierung. Daher erscheint das erfindungsgemäße Verfahren zunächst einmal nachteilig gegenüber der konventionellen thermischen Aktivierung. Es hat sich jedoch gezeigt, dass das erfindungsgemäße Verfahren, trotz des vergleichsweise wahrscheinlich hohen, insbesondere elektrischen, Energiebedarfs, vorteilhaft insbesondere für die Aktivierung von thermisch schwierig zu aktivierenden Tonen ist. Gerade bei komplexen Ausgangsstoffen, wie zum Beispiel Tonen, kommt es bei einer thermischen Aktivierung regelmäßig zu mehreren negativen Effekten. Zum einen ist bekannt, dass beispielsweise aus Tonen bei erhöhter Temperatur Stoffe gasförmig austreten können, die eine aufwändigere Abgasreinigung erfordern. Durch den Verzicht auf höhere Temperaturen kann dieses vermieden werden. Zum anderen werden bei erhöhter thermischer Aktivierungstemperatur oftmals farbgebende Komponenten, beispielsweise Eisenverbindungen, aufoxidiert, was im Falle von stark eisenhaltigen Tonen zu einer ungewünschten Rotfärbung des Produkts führt. Um dieses zu vermeiden ist entweder eine Schutzgasatmosphäre oder eine anschließende Reduktion notwendig, was beides verfahrenstechnisch aufwändig ist. Somit wird zwar für das erfindungsgemäße Verfahren für den eigentlichen Aktivierungsschritt der Energiebedarf erhöht, es vereinfacht sich aber die Abgasbehandlung und eine anschließende Reduzierung kann vermieden werden. Darüber hinaus wird beim thermischen Aktivierungsprozess immer noch Kohlendioxid freigesetzt, das aus fossilen Brennstoffen oder Abfallbrennstoffen stammt, aber auch aus der Entsäuerung von Karbonatmineralen während des Kalzinierens, was schließlich einen Kohlenstoffabscheidungsprozess erfordert. Das erfindungsgemäße Verfahren erfordert lediglich elektrische Energie und es wurde gezeigt, dass die Karbonatmineralen im mechano-chemischen Aktivierungsprozess nicht zersetzt werden, sondern als amorphisiertes und reaktives Material im aktivierten Tonprodukt erhalten bleiben. So kann der gesamte Vorgang der Aktivierung zur Herstellung eines marktfähigen Bindemittels effizient vereinfacht und dekarbonisiert werden. Des Weiteren weisen unterschiedliche Tonminerale unterschiedliche optimale Aktivierungstemperaturen auf. So werden beispielsweise Minerale der Kaolin- und der Chloritgruppe bei deutlich niedrigeren Temperaturen aktiviert als zum Beispiel Minerale der Glimmergruppe (Muskovit, Illit und andere). Wählt man bei Tonen, die Minerale dieser Gruppen enthalten, für die thermische Aktivierung die optimale Aktivierungstemperatur von Kaolinit, so werden Minerale wie Muskovit und Illit noch nicht aktiviert. Wählt man hingegen für die thermische Aktvierung die deutlich höhere Aktivierungstemperatur von Muskovit und Illit, so kommt es, aufgrund der Bildung neuer Mineralphasen, insbesondere Spinelle, zum Überbrennen des Kaolinit, was eine Deaktivierung zur Folge hat. Diese Differenzierung der Tonminerale bezüglich der optimalen Aktivierungstemperatur entfällt hingegen bei der mechano-chemischen Aktivierung.

Erfindungsgemäß ist die erste Hochenergiemühle eine trocken betriebene Rührwerkskugelmühle, Die trocken betriebene Rührwerkskugelmühle wird mit einer Umfangsgeschwindigkeit von 2 m/s bis 8 m/s betrieben.

In einer weiteren Ausführungsform der Erfindung wird in Schritt c) das Mahlen und mechano-chemische Aktivieren mit einem Energieeintrag pro Mahlraumvolumen von wenigstens 200 kW/m³ durchgeführt.

In einer weiteren Ausführungsform der Erfindung wird die erste Hochenergiemühle kontinuierlich betrieben. Dieses bedeutet, dass sowohl gemäß Schritt b) mineralisches Material kontinuierlich in die erste Hochenergiemühle eingetragen wird und gleichzeitig kontinuierlich gemäß Schritt d) aktiviertes mineralisches Material entnommen wird. Bevorzugt wird die erste Hochenergiemühle daher als Durchlaufmühle mit einer Eingangsseite und einer Ausgangsseite betrieben.

Alternativ könnte die erste Hochenergiemühle ausgewählt aus der Gruppe umfassend Schwingmühle und Planetenkugelmühle. Bevorzugt ist in dieser Alternative die erste Hochenergiemühle eine Planetenkugelmühle. Diese Mühlentypen haben sich für die mechano-chemische Aktivierung als besonders geeignet herausgestellt, da mit diesen Mühlentypen besonders hohe Energiedichten ins Material einbringbar sind.

In einer weiteren Ausführungsform der Erfindung wird eine Rührwerkskugelmühle mit einem Länge-zu-Durchmesser-Verhältnis von 2,5 bis 5 ausgewählt.

In einer weiteren Ausführungsform der Erfindung wird die erste Hochenergiemühle mit einem Mahlkörper-Füllungsgrad von 50 Vol.-% bis 95 Vol.-%, bevorzugt von 50 Vol.-% bis 80 Vol.-%, besonders bevorzugt von 60 Vol.-% bis 70 Vol.-%, gefüllt. Hierbei wird das Schüttvolumen der Mahlkörper auf das Mahlraumvolumen der ersten Hochenergiemühle bezogen. Da bei einer einfachen Schüttung der Füllungsgrad um 64 % und bei einer dichtesten Kugelpackung nur um 74 % liegt, ergibt sich selbst bei einem theoretischen Mahlkörper-Füllungsgrad von 100% ein entsprechender Freiraum, welcher beispielsweise von dem zu aktivierenden mineralischen Material eingenommen werden kann. Da der Füllungsgrad einer Mahlkörperschüttung aber sehr extrem von der Form und Gleichförmigkeit der Mahlkörper abhängt, ist es praktisch einfacher, hier den Mahlkörper-Füllungsgrad eben auf das Schüttvolumen und nicht auf das eigentliche (gefüllte) Volumen zu beziehen.

In einer weiteren Ausführungsform der Erfindung werden Mahlkörper aus Eisen oder einer Eisenlegierung oder aus Aluminium oder einer Aluminiumlegierung ausgewählt. Bevorzugt werden Mahlkörper aus Eisen oder einer Eisenlegierung ausgewählt. Insbesondere werden Mahlkörper aus Stahl ausgewählt.

In einer weiteren Ausführungsform der Erfindung werden keramische Mahlkörper ausgewählt.

In einer weiteren Ausführungsform der Erfindung werden Mahlkörper mit einem Durchmesser von 1 mm bis 10 mm ausgewählt.

In einer weiteren Ausführungsform der Erfindung wird die Rührwerkskugelmühle mit einer Umfangsgeschwindigkeit von 2 m/s bis 6 m/s, bevorzugt von 3 m/s bis 5 m/s, besonders bevorzugt von 3,5 m/s bis 4,5 m/s, betrieben.

In einer weiteren Ausführungsform der Erfindung wird die Rührwerkskugelmühle mit einem Gasvolumenstrom und einem Materialstrom betrieben. Das Verhältnis von Gasvolumenstrom zu Materialstrom wird derart eingestellt, dass das Verhältnis von Gasvolumenstrom zu Materialstrom zwischen 0,0001 m³/kg und 5 m³/kg, vorzugsweise zwischen 0,1 m³/kg und 2 m³/kg liegt.

In einer weiteren Ausführungsform der Erfindung erfolgt das Trocknen und Zerkleinern in Schritt a) auf eine Restfeuchte kleiner 1 Gew.-% und eine Korngröße kleiner 2 mm.

In einer weiteren Ausführungsform der Erfindung wird das mineralische Material ausgewählt aus der Gruppe umfassend Ton, Asche, insbesondere Flugasche, Belitzementklinker, Altbetonfeinanteile, Schlacke, Schichtsilikate und Gerüstsilikate. Besonders bevorzugt wird als mineralisches Material Ton oder eine Mischung aus Ton und einem weiteren Material oder mehreren weiteren Materialien ausgewählt aus der Gruppe umfassend Asche, insbesondere Flugasche, Belitzementklinker, Altbetonfeinanteile, Schlacke, Schichtsilikate und Gerüstsilikate.

In einer weiteren Ausführungsform der Erfindung wird das mineralische Material zusammen mit 0,1-50 Gew.-% Quarz oder Korund mechano-chemisch aktiviert.

In einer weiteren Ausführungsform der Erfindung wird nach dem Entnehmen des aktivierten mineralischen Materials in Schritt d) das entnommene Material zur Ermittlung der Aktivierung untersucht. Zur Untersuchung wird oder werden ein Verfahren oder mehrere Verfahren ausgewählt aus der Gruppe umfassend IR-Spektroskopie, RAMAN-Spektroskopie, Röntgenbeugungsanalyse, Wärmeflusskalorimetrie, Thermogravimetrie, Rasterelektronenmikroskopie, Partikelgrößen- und/oder Partikelformanalyse, NMR-Spektroskopie. Besonders bevorzugt wird zur Untersuchung ein Verfahren oder mehrere Verfahren ausgewählt aus der Gruppe umfassend IR-Spektroskopie, RAMAN-Spektroskopie, Röntgenbeugungsanalyse, Wärmeflusskalorimetrie.

In einer weiteren Ausführungsform der Erfindung wird als Gas für den Gasstrom durch die erste Hochenergiemühle ein Gas ausgewählt und verwendet, welches ein Gas oder mehrere Gase ausgewählt ist aus der Gruppe umfassend Stickstoff, Argon, Kohlendioxid, Wasserdampf, Kohlenmonoxid, Wasserstoff, Kohlenwasserstoff, insbesondere Methan, Ethan, Propan und Butan. Besonders bevorzugt weist das Gas hauptsächlich (mehr als 50 Vol.-%) Stickstoff, Kohlendioxid oder Wasserdampf auf. Besonders bevorzugt weist das Gas weniger als 1 Vol.-%, bevorzugt weniger als 0,1 Vol.-%, Sauerstoff auf.

In einer weiteren Ausführungsform der Erfindung wird das mineralische Material in Schritt c) mit einem flüssigen oder festen Reduktionsmittel vermahlen. Beispielsweise kann Kohle beziehungsweise Kohlenstaub als festes Reduktionsmittel verwendet werden. Beispielsweise kann ein flüssiger Kohlenwasserstoff als flüssiges Reduktionsmittel verwendet werden. Die Zugabe dient beispielsweise zum einen dazu, eine Oxidation, beispielsweise von Eisen, zu verhindern. Gleichzeitig kann dieses genutzt werden, um einen gewünschten neutralen Grauton des fertigen Produkts einzustellen.

In einer weiteren Ausführungsform der Erfindung erfolgt das Mahlen in Schritt c) bei 100 °C bis 250 °C Materialtemperatur. Diese erhöhte Temperatur ist vorteilhaft, um eine Kondensation von Wasser zu vermeiden und gegebenenfalls weiteres Wasser austragen zu können.

In einer weiteren Ausführungsform der Erfindung erfolgt nach Schritt d) in einem Schritt e) eine Trennung des aktivierten mineralischen Materials in eine erste Fraktion und eine zweite Fraktion, wobei die erste Fraktion in Schritt b) zurückgeführt wird, wobei die zweite Fraktion als Produkt entnommen wird. Beispielsweise erfolgt die Trennung mittels eines Sichters. Hierbei wird die feinere erste Fraktion zurückgeführt, da die Aktivierung mit einer Vergrößerung der Partikel verbunden ist. Dieses unterscheidet sich grundlegend von der normalen Trennung und Rückführung bei einer Mühle, bei der normalerweise die Grobfraktion zurückgeführt wird.

Durch das erfindungsgemäße Verfahren wird ein Bindemittel hergestellt.

Nachfolgend ist das erfindungsgemäße Verfahren anhand eines in der Zeichnung dargestellten Ausführungsbeispiels näher erläutert.

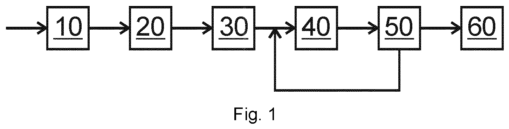

- Fig. 1: Ablaufdiagramm

In Fig. 1 ist das Verfahren stark schematisch dargestellt. Beispielsweise wird ein Ton in die Hammermühle 10 eingebracht, dort zerkleinert und über einen Steigrohrtrockner 20 in ein Eduktsilo 30 gefördert. Der so vorzerkleinerte und getrocknete Ton wird in eine erste Hochenergiemühle 40 überführt, und zwar in eine Rührwerkskugelmühle mit einem Mahlkörper-Füllungsgrad von 65 %, wobei als Mahlkörper Stahl-Kugeln mit einem Durchmesser von 4 mm verwendet werden. Der Energieeintrag beträgt 350 kW / m³. Die Rührwerkskugelmühle hat ein Länge-zu-Durchmesser-Verhältnis von 4 und wird mit einer Umfangsgeschwindigkeit von 4 m/s betrieben. Das Verhältnis von Gasvolumenstrom zu Materialstrom beträgt 0,01 m³/kg. Das aus der ersten Hochenergiemühle 40 entnommene Material wird in einem Sichter 50 getrennt, feines Material wird zum Eingang der ersten Hochenergiemühle 40 zurück transportiert, das grobe aktivierte Material wird in ein Produktsilo 60 überführt.

### Bezugszeichen

- 10: Hammermühle
- 20: Steigrohrtrockner
- 30: Eduktsilo
- 40: erste Hochenergiemühle
- 50: Sichter
- 60: Produktsilo

## Patentansprüche

1. Verfahren zur mechano-chemischen Aktivierung von mineralischem Material, wobei das Verfahren die folgenden Schritte aufweist:
a) Trocknen und Grobzerkleinern des mineralischen Materials,
b) Überführen des mineralischen Materials in eine erste Hochenergiemühle (40),
c) Trockenes Mahlen und mechano-chemisches Aktivieren des mineralischen Materials in der ersten Hochenergiemühle (40),
d) Entnehmen des aktivierten mineralischen Materials aus der ersten Hochenergiemühle (40),
wobei in Schritt c) das Mahlen mit einem Energieeintrag pro Mühlenvolumen von wenigstens 100 kW/m³ durchgeführt wird, wobei die erste Hochenergiemühle (40) eine Rührwerkskugelmühle ist, wobei die Rührwerkskugelmühle mit einer Umfangsgeschwindigkeit von 2 m/s bis 8 m/s betrieben wird,
wobei das aktivierte mineralische Material direkt der ersten Hochenergiemühle (40) entnommen wird und sich somit nicht ein thermischer Aktivierungsschritt anschließt.

2. Verfahren nach Anspruch 1, **dadurch gekennzeichnet, dass** in Schritt c) das Mahlen und mechano-chemische Aktivieren mit einem Energieeintrag pro Mühlenvolumen von wenigstens 200 kW/m³ durchgeführt wird.

3. Verfahren nach einem der vorstehenden Ansprüche, **dadurch gekennzeichnet, dass** eine Rührwerkskugelmühle mit einem Länge-zu-Durchmesser-Verhältnis von 2,5 bis 5 ausgewählt wird.

4. Verfahren nach einem vorstehenden der Ansprüche, **dadurch gekennzeichnet, dass** die erste Hochenergiemühle (40) mit einem Mahlkörper-Füllungsgrad von 50 Vol.-% bis 95 Vol.-%, bevorzugt von 50 Vol.-% bis 80 Vol.-%, besonders bevorzugt von 60 Vol.-% bis 70 Vol.-%, gefüllt wird, wobei das Schüttvolumen der Mahlkörper auf das Mahlraumvolumen der ersten Hochenergiemühle (40) bezogen wird.

5. Verfahren nach einem der vorstehenden Ansprüche, **dadurch gekennzeichnet, dass** Mahlkörper aus Eisen oder einer Eisenlegierung oder aus Aluminium oder einer Aluminiumlegierung oder aus Keramik ausgewählt werden.

6. Verfahren nach einem der vorstehenden Ansprüche, **dadurch gekennzeichnet, dass** Mahlkörper mit einem Durchmesser von 1 mm bis 10 mm ausgewählt werden.

7. Verfahren nach einem der vorstehenden Ansprüche, **dadurch gekennzeichnet, dass** die Rührwerkskugelmühle mit einer Umfangsgeschwindigkeit von 2 m/s bis 6 m/s, bevorzugt von 3 m/s bis 5 m/s, besonders bevorzugt von 3,5 m/s bis 4,5 m/s, betrieben wird.

8. Verfahren nach einem der vorstehenden Ansprüche, **dadurch gekennzeichnet, dass** die Rührwerkskugelmühle mit einem Gasvolumenstrom und einem Materialstrom betrieben wird, wobei das Verhältnis von Gasvolumenstrom zu Materialstrom derart eingestellt wird, dass das Verhältnis von Gasvolumenstrom zu Materialstrom zwischen 0,0001 m³/kg und 5 m³/kg, vorzugsweise zwischen 0,1 m³/kg und 2 m³/kg liegt.

9. Verfahren nach einem der vorstehenden Ansprüche, **dadurch gekennzeichnet, dass** das Trocknen und Zerkleinern in Schritt a) auf eine Restfeuchte kleiner 1 Gew.-% und eine Korngröße kleiner 2 mm erfolgt.

10. Verfahren nach einem der vorstehenden Ansprüche, **dadurch gekennzeichnet, dass** nach dem Entnehmen des aktivierten mineralischen Materials in Schritt d) das entnommene Material zur Ermittlung der Aktivierung untersucht wird, wobei zur Untersuchung ein Verfahren oder mehrere Verfahren ausgewählt werden aus der Gruppe umfassend IR-Spektroskopie, RAMAN-Spektroskopie, Röntgenbeugungsanalyse, Wärmeflusskalorimetrie, Thermogravimetrie, Rasterelektronenmikroskopie, Partikelgrößen- und/oder Partikelformanalyse, NMR-Spektroskopie.

11. Verfahren nach Anspruch 10, **dadurch gekennzeichnet, dass** nach dem Entnehmen des aktivierten mineralischen Materials in Schritt d) das entnommene Material zur Ermittlung der Aktivierung untersucht wird, wobei zur Untersuchung ein Verfahren oder mehrere Verfahren ausgewählt werden aus der Gruppe umfassend IR-Spektroskopie, RAMAN-Spektroskopie, Röntgenbeugungsanalyse, Wärmeflusskalorimetrie.

12. Verfahren nach einem der vorstehenden Ansprüche, **dadurch gekennzeichnet, dass** als Gas ein Gas ausgewählt und verwendet wird, welches ein Gas oder mehrere Gase ausgewählt ist aus der Gruppe umfassend Stickstoff, Argon, Kohlendioxid, Wasserdampf, Kohlenmonoxid, Wasserstoff, Kohlenwasserstoff, insbesondere Methan, Ethan, Propan und Butan.

13. Verfahren nach einem der vorstehenden Ansprüche, **dadurch gekennzeichnet, dass** das mineralische Material in Schritt c) mit einem flüssigen oder festen Reduktionsmittel vermahlen und mechano-chemisch aktiviert wird.

14. Verfahren nach einem der vorstehenden Ansprüche, **dadurch gekennzeichnet, dass** das Mahlen und mechano-chemische Aktivieren in Schritt c) bei 100 °C bis 200 °C erfolgt.

15. Verfahren nach einem der vorstehenden Ansprüche, **dadurch gekennzeichnet, dass** nach Schritt d) in einem Schritt e) eine Trennung des aktivierten mineralischen Materials in eine erste Fraktion und eine zweite Fraktion, wobei die erste Fraktion in Schritt b) zurückgeführt wird, wobei die zweite Fraktion als Produkt entnommen wird.

## Claims

1. A method for the mechanochemical activation of mineral material, wherein the method has the following steps:
a) drying and coarse comminution of the mineral material,
b) transfer of the mineral material to a first high-energy mill (40),
c) dry grinding and mechanochemical activation of the mineral material in the first high-energy mill (40), and
d) removal of the activated mineral material from the first high-energy mill (40),
wherein in step c) the grinding is carried out with an energy input per mill volume of at least 100 kW/m³, wherein the first high-energy mill (40) is an agitator bead mill and
wherein the agitator bead mill is operated at a peripheral speed of 2 m/s to 8 m/s.

2. The method according to claim 1, **characterized in that** in step c) the grinding and mechanochemical activation is carried out with an energy input per mill volume of at least 200 kW /m³.

3. The method according to one of the preceding claims, **characterized in that** an agitator bead mill with a length-to-diameter ratio of 2.5 to 5 is selected.

4. The method according to one of the preceding claims, **characterized in that** the first high-energy mill (40) is filled with a grinding media fill level of from 50% by volume to 95% by volume, preferably from 50% by volume to 80% by volume, particularly preferably from 60% by volume to 70% by volume, wherein the bulk volume of the grinding media relates to the grinding chamber volume of the first high-energy mill (40).

5. The method according to one of the preceding claims, **characterized in that** grinding media are selected from iron or an iron alloy or from aluminum or an aluminum alloy or from ceramics.

6. The method according to one of the preceding claims, **characterized in that** grinding media with a diameter of from 1 mm to 10 mm are selected.

7. The method according to one of the preceding claims, **characterized in that** the agitator bead mill is operated at a peripheral speed of from 2 m/s to 6 m/s, preferably from 3 m/s to 5 m/s, particularly preferably from 3.5 m/s to 4.5 m/s.

8. The method according to one of the preceding claims, **characterized in that** the agitator bead mill is operated with a gas volume flow and a material flow, wherein the ratio of gas volume flow to material flow is set such that the ratio of gas volume flow to material flow is between 0.0001 m³/kg and 5 m³/kg, preferably between 0.1 m³/kg and 2 m³/kg.

9. The method according to one of the preceding claims, **characterized in that** the drying and comminution in step a) is carried out to a residual moisture content of less than 1% by weight and a particle size of less than 2 mm.

10. The method according to one of the preceding claims, **characterized in that** after removal of the activated mineral material in step d), the removed material is analyzed to determine the activation, one or more methods being selected for the examination from the group comprising IR spectroscopy, RAMAN spectroscopy, X-ray diffraction analysis, heat flow calorimetry, thermogravimetry, scanning electron microscopy, particle size and/or particle shape analysis, and NMR spectroscopy.

11. The method according to claim 10, **characterized in that** after removal of the activated mineral material in step d), the removed material is analyzed to determine the activation, wherein for the analysis, one or more methods are selected from the group comprising IR spectroscopy, RAMAN spectroscopy, X-ray diffraction analysis, and heat flow calorimetry.

12. The method according to one of the preceding claims, **characterized in that** the gas selected and used is a gas that comprises one or more gases selected from the group comprising nitrogen, argon, carbon dioxide, water vapor, carbon monoxide, hydrogen, and hydrocarbons, in particular methane, ethane, propane, and butane.

13. The method according to one of the preceding claims, **characterized in that** in step c), the mineral material is ground with a liquid or solid reducing agent and mechanochemically activated.

14. The method according to one of the preceding claims, **characterized in that** the grinding and mechanochemical activation in step c) takes place at 100 °C to 200 °C.

15. The method according to one of the preceding claims, **characterized in that** after step d) in a step e), the activated mineral material is separated into a first fraction and a second fraction, wherein the first fraction is recycled in step b) and the second fraction is removed as a product.

## Revendications

1. Procédé servant à l'activation mécanochimique d'un matériau minéral, où le procédé présente les étapes suivantes consistant :
a) à effectuer un séchage et un concassage grossier du matériau minéral,
b) à transporter le matériau minéral dans un premier broyeur à haute énergie (40),
c)à effectuer un broyage à sec et une activation mécanochimique du matériau minéral dans le premier broyeur à haute énergie (40),
d) à extraire le matériau minéral activé qui est retiré du premier broyeur à haute énergie (40),
où, au cours de l'étape c), le broyage est effectué avec une énergie consommée au moins de 100 kw/m³ par volume de broyeur, où le premier broyeur à haute énergie (40) est un broyeur agitateur à boulets, où le broyeur agitateur à boulets est actionné à une vitesse circonférentielle allant de 2 m/s à 8 m/s, où le matériau minéral activé est extrait directement du premier broyeur à haute énergie (40) et, par conséquent, il ne s'ensuit aucune étape d'activation thermique.

2. Procédé selon la revendication 1, **caractérisé en ce que**, au cours de l'étape c), le broyage et l'activation mécanochimique sont effectués avec une énergie consommée au moins de 200 kw/m³ par volume de broyeur.

3. Procédé selon l'une des revendications précédentes, **caractérisé en ce qu'**un broyeur agitateur à boulets est sélectionné en ayant un rapport longueur/diamètre allant de 2,5 à 5.

4. Procédé selon l'une quelconque des revendications précédentes, **caractérisé en ce que** le premier broyeur à haute énergie (40) est rempli avec un degré de remplissage des éléments broyeurs allant de 50 % en volume à 95 % en volume, de préférence allant de 50 % en volume à 80 % en volume, de manière particulièrement préférée allant de 60 % en volume à 70 % en volume, où le volume apparent des éléments broyeurs est lié au volume de l'espace de broyage du premier broyeur à haute énergie (40).

5. Procédé selon l'une quelconque des revendications précédentes, **caractérisé en ce que** des éléments broyeurs, qui sont sélectionnés, sont en fer ou dans un alliage de fer, ou bien en aluminium ou dans un alliage d'aluminium, ou bien en céramique.

6. Procédé selon l'une quelconque des revendications précédentes, **caractérisé en ce que** des éléments broyeurs, qui sont sélectionnés, ont un diamètre allant de 1 mm à 10 mm.

7. Procédé selon l'une quelconque des revendications précédentes, **caractérisé en ce que** le broyeur agitateur à boulets est actionné à une vitesse circonférentielle allant de 2 m/s à 6 m/s, de préférence allant de 3 m/s à 5 m/s, de manière particulièrement préférée allant de 3,5 m/s à 4,5 m/s.

8. Procédé selon l'une quelconque des revendications précédentes, **caractérisé en ce que** le broyeur agitateur à boulets est actionné avec un débit volumique de gaz et un flux de matériau, où le rapport du débit volumique de gaz relativement au flux de matériau est réglé de manière telle, que le rapport du débit volumique de gaz relativement au flux de matériau soit compris entre 0,0001 m³/kg et 5 m³/kg, de préférence compris entre 0,1 m³/kg et 2 m³/kg.

9. Procédé selon l'une quelconque des revendications précédentes, **caractérisé en ce que** le séchage et le concassage, qui sont effectués au cours de l'étape a), se produisent avec une humidité résiduelle inférieure à 1 % en poids et avec une taille des particules inférieure à 2 mm.

10. Procédé selon l'une quelconque des revendications précédentes, **caractérisé en ce que**, après avoir extrait le matériau minéral activé au cours de l'étape d), le matériau ayant été retiré est examiné afin de déterminer l'activation, où, en vue de procéder à l'examen, un procédé ou plusieurs procédés est ou sont sélectionné(s) parmi le groupe se composant de la spectroscopie IR, de la spectroscopie RAMAN, de l'analyse par diffraction des rayons x, de la calorimétrie à flux thermique, de la thermogravimétrie, de la microscopie électronique à balayage, de l'analyse de la taille et/ou de la forme des particules, de la spectroscopie RMN.

11. Procédé selon la revendication 10, **caractérisé en ce que**, après avoir extrait le matériau minéral activé au cours de l'étape d), le matériau ayant été retiré est examiné afin de déterminer l'activation, où, en vue de procéder à l'examen, un procédé ou plusieurs procédés est ou sont sélectionné(s) parmi le groupe se composant de la spectroscopie IR, de la spectroscopie RAMAN, de l'analyse par diffraction des rayons x, de la calorimétrie à flux thermique.

12. Procédé selon l'une quelconque des revendications précédentes, **caractérisé en ce qu'**un gaz, qui est sélectionné et utilisé comme gaz, est un ou plusieurs de ceux parmi le groupe comprenant de l'azote, de l'argon, du dioxyde de carbone, de la vapeur d'eau, du monoxyde de carbone, de l'hydrogène, des hydrocarbures, en particulier du méthane, de l'éthane, du propane et du butane.

13. Procédé selon l'une quelconque des revendications précédentes, **caractérisé en ce que** le matériau minéral, au cours de l'étape c), est broyé avec un agent de réduction liquide ou solide et activé de manière mécanochimique.

14. Procédé selon l'une quelconque des revendications précédentes, **caractérisé en ce que** le broyage et l'activation mécanochimique sont effectués au cours de l'étape c) entre 100°C et 200°C.

15. Procédé selon l'une quelconque des revendications précédentes, **caractérisé en ce que**, après l'étape d), il se produit, au cours d'une étape e), une séparation du matériau minéral activé en une première fraction et en une seconde fraction, où la première fraction est recyclée au cours de l'étape b), où la seconde fraction est extraite comme produit.
